# EUROPÄISCHE PATENTANMELDUNG

(11) **EP 4 806 243 A1**
(43) Veröffentlichungstag der Anmeldung: **16.09.2026**
(21) Anmeldenummer: 26163886.0
(22) Anmeldetag: 11.03.2026
(51) Int. Cl.: A01B 59/042, B60D 1/145, B60D 1/58, B60D 1/62

(54) **HALTEVORRICHTUNG FÜR EIN LANDWIRTSCHAFTLICHES GERÄT**

(30) Priorität: 14.03.2025 DE 102025109854
(71) Anmelder: Lemken GmbH & Co KG, 46519 Alpen (DE)
(72) Erfinder: Paeßens, Christian, 47661 Issum (DE); Hetzel, Jan, 47551 Bedburg-Hau (DE); Look, Bastian, 46244 Bottrop (DE)

(57) **Zusammenfassung**

Es wird eine Haltevorrichtung (8) für eine Kombination aus einem Zugfahrzeug (1) und einem landwirtschaftlichen Gerät (2) vorgeschlagen, wobei das landwirtschaftliche Gerät (2) ein Fahrwerk (3) und eine Deichsel (4) sowie das Zugfahrzeug (1) eine Anhängekupplung (5) und eine weitere Koppeleinrichtung (6) aufweist und das Zugfahrzeug (1) über die Anhängekupplung (5) mit der Deichsel (4) des landwirtschaftlichen Gerätes (2) beweglich gekoppelt ist. Zumindest eine oder mehrere Verbindungsleitungen (7) sind zwischen dem Zugfahrzeug (1) und dem landwirtschaftlichen Gerät (2) angeordnet und mittels einer Haltevorrichtung (8) am Zugfahrzeug (1) befestigt, wobei die Haltevorrichtung (8) lösbar mit der Koppeleinrichtung (6) des Zugfahrzeugs (2) verbunden ist.

## Beschreibung

Die Erfindung betrifft eine Kombination aus einem Zugfahrzeug und einem landwirtschaftlichen Gerät gemäß dem Oberbegriff von Anspruch 1. Aus EP2556736A1 ist ein Zugfahrzeug mit einer Anhängekupplung und einem daran über eine Deichsel gekoppelten Anhänger bekannt. Weiterhin weist das Zugfahrzeug eine zusätzliche, als Dreipunkthydraulik ausgebildete, mit zwei Unterlenkern versehene Koppeleinrichtung auf. Damit die Unterlenker bei enger Kurvenfahrt nicht mit der Deichsel des gekoppelten Anhängers kollidieren, können deren Hubstreben verkürzt werden, damit die hinteren freien Enden der Unterlenker oberhalb des Schwenkbereiches der Deichsel ausgehoben werden können.

Aus US8955864B2 ist ein landwirtschaftliches Gerät mit einer Zugdeichsel bekannt, wobei oberhalb der Zugdeichsel Schlauchleitungen zur hydraulischen Energieversorgung des landwirtschaftlichen Gerätes an einem von der Deichsel abstehenden Halter angeordnet sind. Diese Schlauchleitungen sind lösbar mit dem Zugfahrzeug verbunden.

Wenngleich die Unterlenker aus EP2556736A1 nicht mehr mit einer Zugdeichsel aus US8955864B2 kollidieren würden, ragen die Unterlenker nunmehr in den benötigten Freiraum zur Schlauchverlegung zwischen Zugfahrzeug und landwirtschaftlichem Gerät beziehungsweise kommen mit dem von der Deichsel abstehenden Halter nachteilig in Kontakt, wie aus Figur 1 der US8955864B2 ersichtlich.

Aufgabe der vorliegenden Erfindungen ist es, eine Anordnung zur Führung von Verbindungsleitungen zwischen Zugfahrzeug und Gerät bereitzustellen, welche die obigen Nachteile vermeidet.

Diese Aufgabe wird durch die Merkmale des kennzeichnenden Teiles des Anspruches 1 gelöst. Die folgenden Unteransprüche geben weitere Vorteile an.

An einer Kombination aus einem Zugfahrzeug und einem landwirtschaftlichen Gerät ist eine Haltevorrichtung angeordnet. Das landwirtschaftliche Gerät weist ein Fahrwerk und eine Deichsel und das Zugfahrzeug eine Anhängekupplung und eine weitere Koppeleinrichtung auf. Dabei ist das Zugfahrzeug über die Anhängekupplung mit der Deichsel des landwirtschaftlichen Gerätes beweglich gekoppelt. Zumindest eine oder mehrere Verbindungsleitungen sind zwischen dem Zugfahrzeug und dem landwirtschaftlichen Gerät angeordnet. Erfindungsgemäß sind eine oder mehrere Verbindungsleitungen mittels einer Haltevorrichtung am Zugfahrzeug befestigt, geführt oder angeordnet, wobei die Haltevorrichtung lösbar mit der Koppeleinrichtung des Zugfahrzeuges verbunden ist. Vorteilhaft steht die Koppeleinrichtung des Zugfahrzeuges für diesen Zweck zur Verfügung, da das landwirtschaftliche Gerät bereits über die Anhängekupplung mit dem Zugfahrzeug verbunden ist und die Koppeleinrichtung ansonsten nicht genutzt würde.

In einer weiteren Erfindungsform ist die Haltevorrichtung in Fahrtrichtung des Zugfahrzeuges gesehen hinter der Anhängekupplung des Zugfahrzeuges angeordnet. Die Anhängekupplung des Zugfahrzeuges ist in Fahrtrichtung gesehen möglichst nahe an der Hinterachse des Zugfahrzeuges angeordnet, um dessen Vorderachsentlastung durch die Stützlast der Deichsel zu minimieren. Demgegenüber ist die Haltevorrichtung möglichst weit von der Hinterachse des Zugfahrzeuges entfernt, um einen Kontakt der Verbindungsleitungen mit den Rädern der Hinterachse des Zugfahrzeuges zu vermeiden. Weiter bevorzugt ist die Haltevorrichtung auch außerhalb der Radkontur angeordnet. Dies entspricht, von der Seite des Zugfahrzeuges gesehen, einer Anordnung außerhalb des Raddurchmessers der Räder der hinteren Achse des Zugfahrzeuges. Dies hat den Vorteil, dass bei einer zum Zugfahrzeug eingeschwenkten Stellung der Deichsel des landwirtschaftlichen Gerätes, wie sie bei Lenkbewegungen des Zugfahrzeuges auftritt, die Verbindungsleitungen zwischen Zugfahrzeug und landwirtschaftlichem Gerät keinesfalls mit den rotierenden Rädern des Zugfahrzeuges in Berührung kommen. Dies ist selbst dann der Fall, wenn die Zugdeichsel selbst bei einer extremen Schwenkbewegung fast das Reifenprofil der rotierenden Räder des Zugfahrzeuges berührt.

In einer besonderen Erfindungsform ist die Haltevorrichtung oberhalb der Anhängekupplung und oberhalb der Deichsel angeordnet. Vorteilhaft wird ein Bodenkontakt der Verbindungsleitungen durch diese Anordnung vermieden. Zugleich kann die Länge der Verbindungsleitung kürzer ausfallen, da die Verbindungsschnittstellen für die Verbindungsleitungen am Zugfahrzeug ebenfalls meist oberhalb der Anhängekupplung angeordnet sind. Oft ist im Bereich der Anhängekupplung des Zugfahrzeuges zudem eine Zapfwelle zur Übertragung von Rotationsenergie für das landwirtschaftliche Gerät angeordnet. Einen Kontakt der Verbindungsleitungen mit einem Gelenkwellenstrang, welcher die Zapfwelle des Zugfahrzeuges mit dem landwirtschaftlichen Gerät verbindet, wird durch die Anordnung der Haltevorrichtung oberhalb der Deichsel und somit auch oberhalb des Gelenkwellenstranges ebenfalls vermieden.

Weiterhin vorteilhaft ist die Haltevorrichtung mit der Koppeleinrichtung des Zugfahrzeuges höhenverstellbar ausgebildet. Insbesondere ist dabei die Koppeleinrichtung als höhenbewegliche Hubvorrichtung ausgebildet. Somit kann auch bei wechselnden Zugfahrzeugen eine optimale Höhe der Haltevorrichtung oberhalb der Deichsel des landwirtschaftlichen Gerätes eingestellt werden. Bevorzugt ist die Koppeleinrichtung des Zugfahrzeuges zur Aufnahme der Haltevorrichtung als Dreipunktkraftheber mit einem ersten und einem zweiten Unterlenker sowie einem optionalen Oberlenker ausgebildet. Soll eine freie Kippbewegung der Haltevorrichtung in Fahrtrichtung verhindert werden, kann die Haltevorrichtung einen weiteren Aufnahmepunkt zur Befestigung des Oberlenkers aufweisen. Der Oberlenker bildet eine zusätzliche Koppelstange zum Zugfahrzeug, welche die Kippbewegung der Haltevorrichtung verhindert. Dies ist insbesondere bei einer Anordnung der Haltevorrichtung oberhalb der Unterlenker von Vorteil.

Weiter bevorzugt ist die Haltevorrichtung mittels einer Querverbindung zumindest an einem ersten und einem zweiten Unterlenker des Dreipunktkrafthebers angeordnet. Die Unterlenker weisen endseits standardisierte Aufnahmepunkte oder Fanghaken auf, in welche die Haltevorrichtung über sich wechselnde Zugfahrzeuge hinweg aufgenommen werden können. Die Verbindungsleitungen können dabei oberhalb oder unterhalb der Querverbindung geführt werden. Dabei bewirkt eine Führung unterhalb der Querverbindung, also mit hängender Haltevorrichtung, eine Selbstzentrierung der Verbindungsleitungen in der Haltevorrichtung. Eine Führung der Verbindungsleitungen oberhalb der Querverbindung ermöglicht einen größeren Freiraum zwischen Deichsel und Verbindungsleitung auf Höhe der Querverbindung. Dies ist insbesondere bei einem zusätzlichen Gelenkwellenstrang von Vorteil, welcher zwischen Zugfahrzeug und landwirtschaftlichem Gerät verläuft, insbesondere, wenn der Gelenkwellenstrang zumindest im Bereich der Haltevorrichtung oberhalb der Deichsel verläuft.

In einer weiteren Erfindungsform ist die Haltevorrichtung seitenbeweglich an der Koppeleinrichtung, insbesondere an einer Querverbindung angeordnet. Hierdurch wird die Schlauchführung auch bei starkem Lenkeinschlag, beispielsweise bei enger Kurvenfahrt, wesentlich verbessert. Die Seitenbeweglichkeit der Haltevorrichtung kann durch einen Pendel- oder Schwenkarm, eine Parallelogrammführung oder eine Schiebeführung realisiert werden, beispielsweise indem die Haltevorrichtung sich entlang der Querverbindung bewegt oder gleitet. Durch Anschlagelemente, welche insbesondere an der Querverbindung angeordnet sind, kann die Seitenbeweglichkeit der Haltevorrichtung begrenzt werden, um Kollisionen mit den benachbarten, hinteren Rädern des Zugfahrzeuges oder anderen Bauteilen zu verhindern.

In einer montagefreundlichen Ausführungsform der Erfindung ist die Haltevorrichtung mehrteilig mit einer lösbaren Aufnahme für eine oder mehrere Verbindungsleitungen ausgebildet.

Insbesondere weist die lösbare Aufnahme einen, bevorzugt schwenkbaren, Bügel, ein Seil, eine Kette oder einen Gurt auf, welche oder welcher die Verbindungsleitungen aufnimmt. Dies ermöglicht ein einfaches Hinzufügen einzelner Verbindungsleitungen zur Aufnahme in die Haltevorrichtung, welche dann gemeinsam mit der Haltevorrichtung in die Koppelvorrichtung des Zugfahrzeuges aufgenommen werden können. Die lösbare Aufnahme kann mit weiteren Arretierungsmitteln oder einer Arretierung versehen sein, um ein unbeabsichtigtes Lösen der Aufnahme von der Haltevorrichtung zu verhindern.

Insbesondere sind die Verbindungsleitungen, welche durch die Haltevorrichtung aufgenommen werden, als Saug- oder Druckschlauch oder Kabel ausgebildet. Die Saug- oder Druckschläuche dienen insbesondere der Versorgung des Anbaugerätes mit auszubringenden Flüssigkeiten oder granularem Material in einem pneumatischen Förderstrom. Weiterhin können Druckschläuche zur Übertragung von hydraulischer oder pragmatischer Energie verwendet werden, welche zur Betätigung von Aktoren auf dem landwirtschaftlichen Gerät oder für eine Druckluftbremsanlage verwendet werden. Ebenfalls können die Verbindungsleitungen als Kabel zur Übertragung von elektrischer Energie oder Signalen ausgebildet sein. Weiter bevorzugt sind mehrere Verbindungsleitungen in einem Bündel gruppiert, was eine einfachere Verlegung entlang der Deichsel ermöglicht. Dabei kann das Bündel von Verbindungsleitungen mit einer weiteren, insbesondere im Bereich der Haltevorrichtung angeordneten Ummantelung oder ähnlichen Fixiereinrichtungen zumindest teilweise umschlossen sein. Dies ermöglicht die gemeinsame Verlegung und Gruppierung von Verbindungsleitungen, welche ansonsten einzeln vom Bündel abstehen könnten.

In einer speziellen Erfindungsform ist die Haltevorrichtung in einer weiteren Anordnung, bevorzugt aufrecht zur Deichsel oder nach oben abstehend, lösbar mit der Deichsel verbunden. Wird das landwirtschaftliche Gerät vom Zugfahrzeug getrennt und abgestellt, dient die Haltevorrichtung dazu, die Verbindungsleitungen in einer Parkposition aufzunehmen. Die Verbindungsleitungen können dann nicht auf den Boden fallen und verschmutzen. Sollte das landwirtschaftliche Gerät an einem Zugfahrzeug gekoppelt werden, welches neben einer Anhängekupplung keine weitere Koppeleinrichtung wie eine Hubvorrichtung oder einen Dreipunktkraftheber aufweist, bildet die Haltevorrichtung vorteilhaft eine weitere Möglichkeit zur Führung der Verbindungsleitung.

In einer vorteilhaften Erfindungsform ist hinter der Haltevorrichtung, die von der Koppeleinrichtung des Zugfahrzeuges aufgenommen wird, eine weitere, zusätzliche Haltevorrichtung an der Deichsel angeordnet. Diese ermöglicht eine verbesserte Führung der Verbindungsleitungen entlang der Deichsel. Bevorzugt ist die weitere Haltevorrichtung verschiebbar oder verlagerbar an der Deichsel angeordnet.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig. 1 eine Kombination aus einem Zugfahrzeug und einem landwirtschaftlichen Gerät mit Fahrwerk und Zugdeichsel in Seitenansicht,
Fig. 2 eine Perspektive der Leitungsführung und der Anbindung der Zugdeichsel an das Zugfahrzeug in Geradeausfahrt,
Fig. 3 ein Detail der Leitungsführung und der Haltevorrichtung aus Fig. 2,
Fig. 4 analog zu Fig. 2 die Leitungsführung und die Anbindung der Zugdeichsel an das Zugfahrzeug in Kurvenfahrt,
Fig. 5 analog zu Fig. 4 die Leitungsführung und die Anbindung der Zugdeichsel an das Zugfahrzeug in Draufsicht und
Fig. 6 eine Anordnung der Haltevorrichtung in Parkposition auf der Zugdeichsel.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

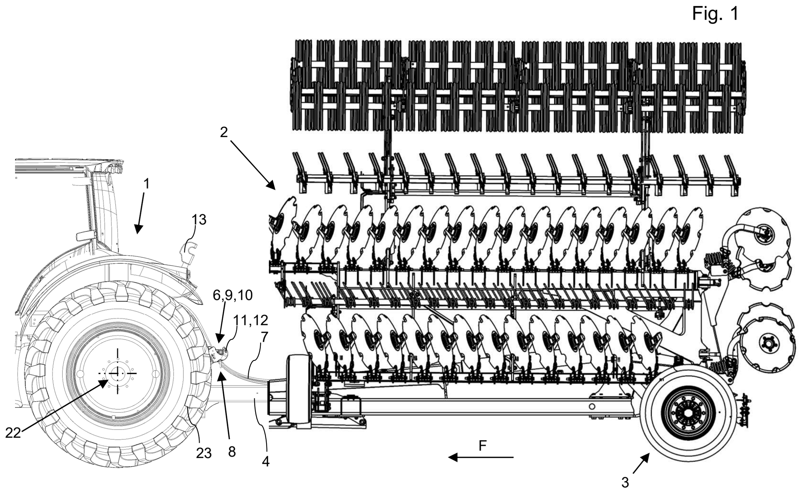

In Figur 1 ist eine Kombination aus einem Zugfahrzeug 1 und einem landwirtschaftlichen Gerät 2 in Fahrtrichtung F dargestellt. Das Gerät 2 weist im mittleren bis hinteren Bereich ein Fahrwerk 3 auf. Im vorderen Bereich ist das Gerät 2 über eine Zugdeichsel 4 mit der Anhängekupplung 5 des Zugfahrzeuges 1 beweglich verbunden. Die Anhängekupplung 5 ist durch das Rad 23 der Hinterachse 22 des Zugfahrzeuges 2 verdeckt, in den folgenden Figuren jedoch dargestellt. Oberhalb der Deichsel 4 befindet sich eine weitere Koppeleinrichtung 6, welche als höhenverstellbare Hubvorrichtung 9, insbesondere in Form eines Dreipunktkrafthebers 10 ausgebildet ist. Der Dreipunktkraftheber 10 weist zwei Unterlenker 11 und 12 sowie einen Oberlenker 13 auf. Die hinteren Enden der Unterlenker 11 und 12 ragen über die Kontur der Räder 23 der Hinterachse 22 hinaus. Die Hubvorrichtung 9 ist in einer ausgehobenen Stellung dargestellt, mit welcher sie nicht mit der Deichsel 4 in Berührung kommt. In die Koppeleinrichtung 6 ist eine Haltevorrichtung 8 für die Verbindungsleitungen 7 eingehängt, welche die Verbindungsleitungen 7 von der Zugdeichsel 4 kommend zu einer Verbindungsstelle des Zugfahrzeuges 1 führt.

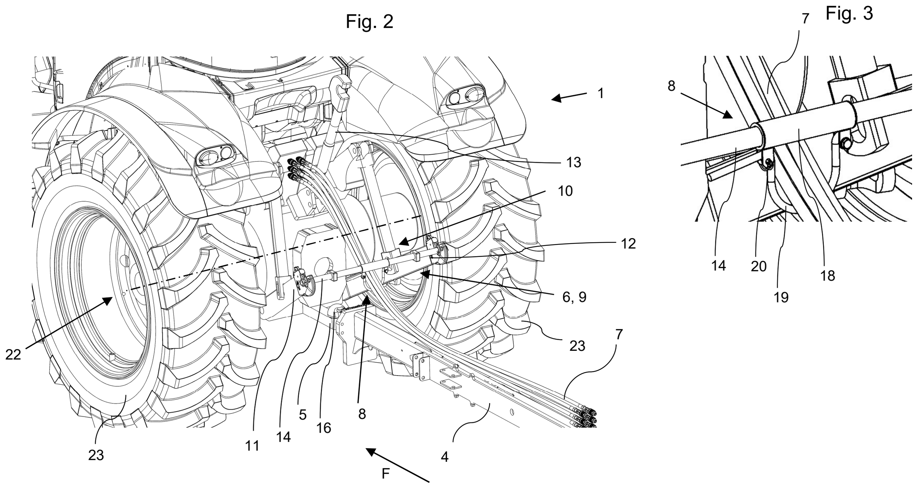

Fig. 2 zeigt eine Perspektive der Leitungsführung und der Anbindung der Zugdeichsel 4 an das Zugfahrzeug 1 in Geradeausfahrt in Fahrtrichtung F. Das Zugfahrzeug 1 weist im Bereich der Hinterachse 22 eine Anhängekupplung 5 auf. Die Anhängekupplung 5 kann oberhalb, auf gleicher Höhe oder, wie dargestellt, unterhalb der Hinterachse 22 angeordnet sein. Die Anhängekupplung 5 ist beispielsweise als Bolzen-, Haken- oder Kugelkopfkupplung ausgebildet. Die Zugdeichsel 4 ist mit einem zur Anhängekupplung 5 passenden Kuppelteil 16 beweglich mit der Anhängekupplung 5 des Zugfahrzeuges 1 lösbar verbunden. Ebenfalls im hinteren Bereich des Zugfahrzeuges befindet sich die Koppeleinrichtung 6, welche als höhenverstellbare Hubvorrichtung 9, beispielsweise als Hitch-Vorrichtung, oder wie dargestellt, als Dreipunktkraftheber 10, bestehend aus einem linken Unterlenker 11 und einem rechten Unterlenker 12 sowie einem Oberlenker 13, ausgeführt ist. Der Oberlenker 13 wird nur optional verwendet und ist in einer Parkposition dargestellt. Rechts und links an der Hinterachse sind die hinteren Räder 23 zum Antrieb des Zugfahrzeuges 1 angeordnet, welche einen großen Teil der Koppeleinrichtung 6 sowie die Anhängekupplung 5 zwischen ihren Umfangskonturen einschließen. Die Unterlenker 11 und 12 der als Dreipunktkraftheber 10 ausgebildeten Hubvorrichtung 9 sind in einer ausgehobenen Stellung angeordnet, sodass sich ihre hinteren Enden oberhalb der Zugdeichsel 4 befinden. Zwischen den hinteren Enden der beiden Unterlenker 11 und 12 ist eine Querverbindung 14 lösbar angeordnet, welche die beiden Unterlenker 11 und 12 miteinander verbindet und welche zur Aufnahme der Haltevorrichtung 8 dient. In der Nähe des Oberlenkers 13 sind mehrere Verbindungsleitungen 7 lösbar am Zugfahrzeug 1 angeordnet. Die Verbindungsleitungen 7 werden im weiteren Verlauf durch die Haltevorrichtung 8 weiter nach hinten zum landwirtschaftlichen Gerät 2 beziehungsweise zu dessen Deichsel 4 geführt.

Fig. 3 zeigt detailliert die Leitungsführung und die Haltevorrichtung 8 aus Figur 2 als Einzelheit. Die Haltevorrichtung 8 ist bevorzugt beweglich, insbesondere seitlich verschiebbar an der Querverbindung 14 angeordnet. Hierzu weist die Haltevorrichtung 8 ein Gleitstück 18 auf, welches auf der Querverbindung 14 angeordnet ist. An dem Gleitstück 18 ist zudem ein lösbarer und / oder bevorzugt schwenkbarer Bügel 19 angeordnet, welcher die Verbindungsleitungen 7 umschließt und zusammen mit der Haltevorrichtung 8 beziehungsweise der Querverbindung 14 entsprechend der Bewegungen des Zugfahrzeuges 1 die Verbindungsleitungen 7 führt. Der im dargestellten Beispiel schwenkbar ausgebildete Bügel weist zudem eine weitere Arretierung 20 auf, mit welchem der Bügel 19 nach Verlegung der Verbindungsleitungen 7 an der Haltevorrichtung 8 befestigt werden kann. Anstelle des Bügels 19 können auch ein Seil, ein Riemen oder eine Kette als Führungselement verwendet werden, welche die Verbindungsleitungen 7 umschließen. Sowohl der Bügel 19 als auch die weiteren, vorgenannten Führungselemente können auch ohne ein weiteres Gleitstück 18 unmittelbar auf der Querverbindung, insbesondere seitenbeweglich oder verschiebbar angeordnet sein.

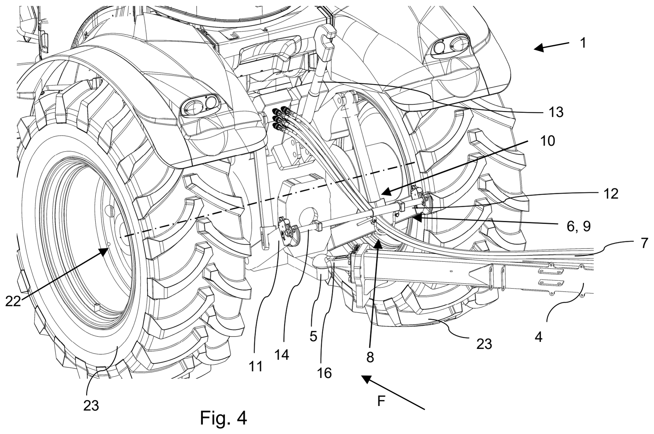

Figur 4 zeigt analog zu Figur 2 eine Perspektive der Leitungsführung und der Anbindung der Zugdeichsel 4 an das Zugfahrzeug 1 in Kurvenfahrt. Durch die Lenkbewegung des Zugfahrzeuges 1 schwenkt die Deichsel 4 des nachlaufenden Gerätes 2 nach links oder, wie dargestellt, nach rechts aus. Die Verbindungsleitungen 7 verlagern sich ebenfalls seitlich in Richtung der Schwenkbewegung der Deichsel 4. Sofern erforderlich, kann sich die Haltevorrichtung 8 relativ zur Koppeleinrichtung 6 seitlich bewegen und den Verlauf der Verbindungsleitungen, insbesondere entlang der Querverbindung 14, folgen. Die weiteren Bezugszeichen entsprechen denen aus Figur 2, wie dort bereits beschrieben.

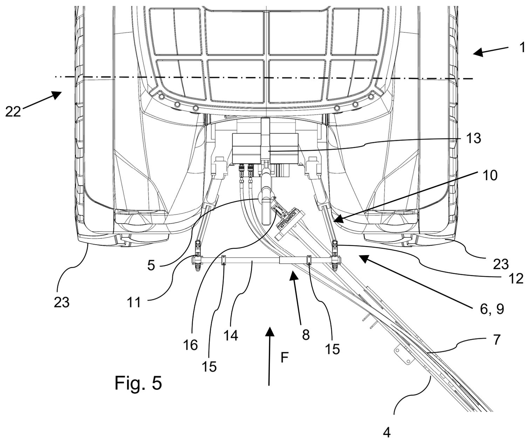

Figur 5 zeigt die gleiche Anordnung aus Figur 4 in Draufsicht. Auch hier ist die Verlagerung der Verbindungsleitungen 7 vom Zugfahrzeug 1 kommend in Richtung der ausgeschwenkten Deichsel 4 zu erkennen. Die Haltevorrichtung 8 hält dabei die Verbindungsleitungen 7 auf Höhe der Querverbindung 14, wobei sich die Haltevorrichtung 8 seitlich auf der Querverbindung 14 bewegen kann. Die seitliche Bewegung der Haltevorrichtung 8 auf der Querverbindung 14 kann durch weitere, bevorzugt einstellbare Anschläge 15 begrenzt werden. Damit wird ausgeschlossen, dass die Verbindungsleitungen 7 bei einer extrem eingeschwenkten Deichsel 4 mit den Rädern 23 des Zugfahrzeuges 1 in Verbindung kommen und Schaden nehmen.

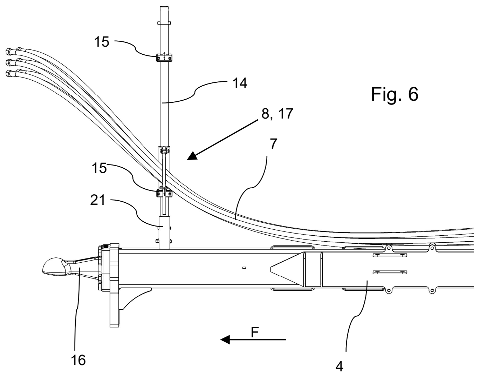

Wird das landwirtschaftliche Gerät 2 vom Zugfahrzeug 1 getrennt, kann gemäß Figur 6 die Haltevorrichtung 8 mitsamt der durch sie geführten Verbindungsleitungen 7 in einer Parkposition auf der Zugdeichsel 4 angeordnet werden. Bevorzugt ist hierzu ein Halter 21 oder eine entsprechende Aufnahme auf der Zugdeichsel 4 angeordnet, welche die Haltevorrichtung 8, insbesondere gemeinsam mit der Querverbindungen 14 lösbar aufnimmt. Bei einer langen Zugdeichsel 4 und entsprechenden langen Verbindungsleitungen 7 können eine oder mehrere, weitere Haltevorrichtungen 17 entlang der Zugdeichsel angeordnet werden. Die weitere Haltevorrichtung 17 entspricht bevorzugt den Ausführungen der Haltevorrichtung 8, wie weiter oben beschrieben.

### Bezugszeichenliste

1 Zugfahrzeug
2 landwirtschaftliches Gerät
3 Fahrwerk
4 Deichsel
5 Anhängekupplung
6 Koppeleinrichtung
7 Verbindungsleitung
8 Haltevorrichtung
9 Hubvorrichtung
10 Dreipunktkraftheber
11 Unterlenker
12 Unterlenker
13 Oberlenker
14 Querverbindung
15 Anschlag
16 Kuppelteil
17 Haltevorrichtung
18 Gleitstück
19 Bügel
20 Arretierung
21 Halter
22 Hinterachse
23 Rad

## Patentansprüche

1. Haltevorrichtung (8) für eine Kombination aus einem Zugfahrzeug (1) und einem landwirtschaftlichen Gerät (2), wobei das landwirtschaftliche Gerät (2) ein Fahrwerk (3) und eine Deichsel (4) aufweist, wobei das Zugfahrzeug (1) eine Anhängekupplung (5) und eine weitere Koppeleinrichtung (6) aufweist, wobei das Zugfahrzeug (1) über die Anhängekupplung (5) mit der Deichsel (4) des landwirtschaftlichen Gerätes (2) beweglich gekoppelt ist, wobei zumindest eine oder mehrere Verbindungsleitungen (7) zwischen dem Zugfahrzeug (1) und dem landwirtschaftlichen Gerät (2) angeordnet sind,
**dadurch gekennzeichnet,**
**dass** die Verbindungsleitung (7) mittels einer Haltevorrichtung (8) am Zugfahrzeug (1) befestigt und die Haltevorrichtung (8) lösbar mit der Koppeleinrichtung (6) des Zugfahrzeugs (2) verbunden ist.

2. Haltevorrichtung (8) nach Anspruch 1,
**dadurch gekennzeichnet,**
**dass** die Haltevorrichtung (8) in Fahrtrichtung (F) des Zugfahrzeuges (1) hinter der Anhängekupplung (5) angeordnet ist.

3. Haltevorrichtung (8) nach Anspruch 1 oder 2
**dadurch gekennzeichnet,**
**dass** die Haltevorrichtung (8) oberhalb der Anhängekupplung (5) und der Deichsel (4) angeordnet ist.

4. Haltevorrichtung (8) nach einem der vorherigen Ansprüche,
**dadurch gekennzeichnet,**
**dass** die Haltevorrichtung (8) mit der Koppeleinrichtung (6) des Zugfahrzeuges (1) höhenverstellbar ist und die Koppeleinrichtung (6) als höhenbewegliche Hubvorrichtung (9), insbesondere als Dreipunktkraftheber (10) mit einem ersten und einem zweiten Unterlenker (11, 12) sowie einem optionalen Oberlenker (13), ausgebildet ist.

5. Haltevorrichtung (8) nach einem der vorherigen Ansprüche,
**dadurch gekennzeichnet,**
**dass** die Haltevorrichtung (8) mittels einer Querverbindung (14) zumindest an einem ersten und einem zweiten Unterlenker (11,12) angeordnet ist.

6. Haltevorrichtung (8) nach einem der vorherigen Ansprüche,
**dadurch gekennzeichnet,**
**dass** die Haltevorrichtung (8) seitenbeweglich an der Koppeleinrichtung (6), insbesondere an der Querverbindung (14) angeordnet ist.

7. Haltevorrichtung (8) nach einem der vorherigen Ansprüche,
**dadurch gekennzeichnet,**
**dass** die Haltevorrichtung (8) mehrteilig mit einer lösbaren Aufnahme für eine oder mehrere Verbindungsleitungen (7) ausgebildet ist.

8. Haltevorrichtung (8) nach einem der vorherigen Ansprüche,
**dadurch gekennzeichnet,**
**dass** die Verbindungsleitung (7), welche durch die Haltevorrichtung aufgenommen wird, als Saug- oder Druckschlauch oder Kabel ausgebildet ist.

9. Haltevorrichtung (8) nach einem der vorherigen Ansprüche,
**dadurch gekennzeichnet,**
**dass** die Haltevorrichtung (8) in einer weiteren Anordnung, bevorzugt aufrecht zur Deichsel (4) oder nach oben abstehend, lösbar mit der Deichsel (4) verbunden ist.

10. Haltevorrichtung (8) nach einem der vorherigen Ansprüche,
**dadurch gekennzeichnet,**
**dass** eine weitere Haltevorrichtung (17) hinter der Haltevorrichtung (8) an der Deichsel (4) verbunden ist.
